# EUROPÄISCHE PATENTSCHRIFT

(11) **EP 3 312 388 B1**
(45) Veröffentlichungstag und Bekanntmachung des Hinweises auf die Patenterteilung: **05.06.2019**
(21) Anmeldenummer: 16195268.4
(22) Anmeldetag: 24.10.2016
(51) Int. Cl.: F01D 11/00, F01D 11/02, F16J 15/447

(54) **ROTORTEIL, ZUGEHÖRIGEVERDICHTER, TURBINE UND HERSTELLUNGSVERFAHREN**
ROTOR PART, CORRESPONDING COMPRESSOR, TURBINE AND MANUFACTURING METHOD
PIÈCE DE ROTOR, COMPRESSEUR, TURBINE ET PROCÉDÉ DE FABRICATION ASSOCIÉS

(43) Veröffentlichungstag der Anmeldung: 25.04.2018
(73) Patentinhaber: MTU Aero Engines AG, 80995 München (DE)
(72) Erfinder: Binsteiner, Thomas, 81245 München (DE); Williams, Stephen Royston, 82229 Seefeld (DE); Geppert, Johann, 82299 Türkenfeld (DE); Hertter, Manuel, 81243 München (DE)

(56) Entgegenhaltungen:
- EP-A1- 3 056 685
- EP-A2- 2 677 119
- DE-A1-102009 055 913
- FR-A1- 3 013 096

## Beschreibung

Die vorliegende Erfindung betrifft ein Rotorteil für eine Gasturbine, ferner einen Verdichter sowie eine Turbine mit einem derartigen Rotorteil und ein Verfahren zur Herstellung eines Rotorteils.

Verdichter ebenso wie Turbinen in axialen Strömungsmaschinen, beispielsweise Flugtriebwerke, umfassen in der Regel einen Rotor mit einer Mehrzahl an Laufschaufelreihen, die mit einer Rotorwelle verbunden sind, und einen Stator, in dem der Rotor um seine zentrale Achse rotiert. Der Stator besteht im Wesentlichen aus einem Gehäuse und einer Vielzahl von Leitschaufelreihen. Zwischen dem Rotor und dem Stator ist ein Strömungskanal ausgebildet, durch den ein Hauptstrom die Strömungsmaschine durchströmt. Die Leitschaufelreihen sind dazu eingerichtet, den Hauptstrom in jeweils geeigneter Weise auf die Laufschaufelreihen zu führen. Die Laufschaufeln der Laufschaufelreihen können jeweils einzeln gefertigt und in Aufnahmen eines Montageabschnitts, insbesondere in Nuten, einer Rotorscheibe eingesetzt sein, oder es können einteilige Blisks (bladed disk) verwendet werden, die jeweils eine Scheibe, einen Ring und/oder ein Trommelteil mit einer Mehrzahl einstückig daran angeformter oder angefügter (z.B. angeschweißter) Laufschaufeln umfassen. Derartige Blisks weisen gegenüber den aus Einzelschaufeln zusammengesetzten Laufschaufelreihen insbesondere den Vorteil einer größeren mechanischen Belastbarkeit und eines geringeren Gewichts auf.

Zur Vermeidung von Verlusten müssen insbesondere zwischen beweglichen und feststehenden Bauteilen ausgebildete Durchlässe möglichst klein gehalten werden. Beispielsweise sind zur Abdichtung derartiger Durchlässe zwischen dem Rotor und den radial innen angeordneten Spitzen der Leitschaufeln sogenannte "Dichtfins" bekannt. Diese sind im Allgemeinen jeweils als ein ringartiger radialer Vorsprung ausgebildet und dazu eingerichtet, mit einem Spitzenbereich in Einlaufbeläge einzugreifen, die an den Leitschaufelspitzen angeordnet sind. Die Angabe "radial" bezieht dabei sich in dieser Schrift ebenso wie "axial" - sofern nichts anderes angegeben ist - stets auf die vorgesehene Rotationsachse des Rotors bzw. einer Rotorwelle.

Damit die Dichtfins den auftretenden mechanischen und thermischen Belastungen beim Eingreifen in die Einlaufbeläge standhalten können, werden ihre Spitzenbereiche und deren Seitenbereiche in der Regel beschichtet. Für ein gezieltes Beschichten ist es jedoch erforderlich, dass Spitzenseitenbereiche für das jeweilige Beschichtungswerkzeug zugänglich sind. Bei den einteiligen Blisks kann deshalb das Beschichten von einer axialen Richtung her wegen einer in geringem Abstand angeordneten Laufschaufelreihe oder eines nahen anderen Dichtfins unmöglich oder zumindest mit sehr hohem Aufwand verbunden sein. Die DE 10 2009 055 913 A1 schlägt daher zum vereinfachten radialen Beschichten eines Spitzenbereichs eines Bliskdichtfins vor, Flanken des Spitzenbereichs flacher auszubilden als Flanken eines radial inneren Dichtfinbereichs. Grundsätzlich kann diese Problematik auch bei Rotorscheiben mit einem Montageabschnitt für die Laufschaufeln einer Laufschaufelreihe auftreten, insbesondere dann, wenn der Montageabschnitt radial außen zu den Dichtfins endet.

In der EP 2 677 119 A2 geht es um das Ausbalancieren eines Rotors im Allgemeinen. In der EP 3 056 685 A1 ist ein Dichtfin gezeigt, der einen Hinterschnitt aufweist. Der Flankenwinkel der Laufschaufelreihe zugewandten Stirnseite ist negativ, während der Flankenwinkel der Laufschaufelreihe abgewandten Gegenseite positiv ist. Daraus folgt, dass die Steilheit der Gegenflanke größer als die Steilheit der Stirnflanke ist, eine Beschichtbarkeit wird deutlich erschwert. Das in der FR 3 013 096 A1 gezeigte herkömmliche Dichtsystem weist eine Vielzahl von symmetrischen Dichtfins auf, deren Stirn- und Gegenflanken gleich steil sind.

Die vorliegende Erfindung hat die Aufgabe, eine Technik bereitzustellen, mit der die genannten Nachteile vermieden werden können und insbesondere eine zuverlässige Beschichtung von Dichtfins gewährleistet ist.

Die Aufgabe wird gelöst durch ein Rotorteil gemäß Anspruch 1, einen Verdichter gemäß Anspruch 13, eine Turbine gemäß Anspruch 14 und ein Verfahren zur Herstellung einer Blisk gemäß Anspruch 15. Vorteilhafte Ausführungsformen sind in den Unteransprüchen, der Beschreibung und den Figuren offenbart.

Ein erfindungsgemäßes Rotorteil ist für einen Einbau in einer Gasturbine (z.B. einem Flugzeugtriebwerk) vorgesehen oder bereits in einer Gasturbine eingebaut, insbesondere in einem Verdichter oder in einer Turbine. Es ist als eine Blisk mit einer um eine zentrale Achse herum verlaufenden Laufschaufelreihe oder als Rotorscheibe mit einem Montageabschnitt zum Montieren von Laufschaufeln zur Bildung einer Laufschaufelreihe ausgeführt. Zur Laufschaufelreihe und/oder zum Montageabschnitt axial versetzt weist es mindestens einen ringartigen Dichtfin auf, der koaxial zur Laufschaufelreihe und/oder zum Montageabschnitt verläuft. Die zentrale Achse ist dabei die vorgesehene Rotationsachse der Gasturbine bzw. dessen Rotors. Erfindungsgemäß weist der mindestens eine Dichtfin einen radial äußeren Spitzenbereich mit einer der Laufschaufelreihe und/oder dem Montageabschnitt zugewandten Stirnflanke und eine von der Laufschaufelreihe und/oder dem Montageabschnitt abgewandten Gegenflanke auf, wobei die Stirnflanke eine kleinere Steilheit als die Gegenflanke hat.

Die genauen Begrenzungen des genannten Spitzenbereichs sind dabei nicht unbedingt physikalisch vorgegeben, vielmehr kann der Spitzenbereich als ein entsprechender radial äußerer Ringbereich mit den geforderten Eigenschaften am Dichtfin bestimmt werden.

Durch die kleinere Steilheit des Spitzenbereichs an der seiner der Laufschaufelreihe bzw. dem Montageabschnitt zugewandten Stirnflanke im Vergleich zu seiner von der Laufschaufelreihe abgewandten Gegenflanke wird der Spitzenbereich asymmetrisch ausgeführt, wobei sich die Stirnflanke im Vergleich zu einem wie in der DE 10 2009 055 913 A1 gezeigten symmetrischen Spitzenbereich axial weiter erstreckt als die Gegenflanke. Somit lassen sich die Stirnflanken auch bei einem Spritzwinkel in bzw. in wesentlich in radialer Richtung, d.h. direkt von oben, beschichten. Je kleiner die Steilheit der Stirnflanke ist, je größer also ein Flankenwinkel zwischen der Stirnflanke und einer Radialebene ist, desto besser ist die Schichtqualität. Die Radialebene ist eine Ebene, die von der zentralen Achse X durchstoßen wird. Ein beispielhafter Winkelbereich der Stirnflanke liegt zwischen 25° und 45°, bevorzugterweise bei 30°. Zur Verbesserung der Beschichtung der Gegenflanke kann diese ebenfalls zur Radialebene angestellt sein. Aufgrund der gegenüber der Stirnflanke jedoch per se besseren Zugänglichkeit, genügt bei der Gegenflanke eine kleinere Steilheit als bei der Stirnflanke. Bevorzugterweise befindet sich ein Flankenwinkel der Gegenflanke in einem Winkelbereich von 1° bis 10° zur Radialebene, bevorzugterweise beträgt der Flankenwinkel der Gegenflanke 5°.

Bevorzugterweise gehen die Stirnflanke und die Gegenflanke über eine radial äußere Ringfläche ineinander über. Hierdurch wird der Spitzenbereich an seinem radial äußeren Ende flächig ausgebildet, ein schmaler Grad, wie er beim direkten Ineinanderübergehen der Stirnflanke und der Gegenflanke entstehen könnte, wird vermieden. Durch die Ringfläche wird der Spitzenbereich beschichtbar und zudem an seinem radial äußeren Ende quasi verdickt und somit stabilisiert.

Bei einem Ausführungsbeispiel weist die Ringfläche zumindest eine Planfläche auf. Die zumindest eine Planfläche verläuft bevorzugterweise axial zur zentralen Achse und ist somit technisch einfach ausführbar. Die Ringfläche kann auch eine Vielzahl von Planflächen aufweisen, die dachartig zueinander angestellt sind.

Bei einem anderen Ausführungsbeispiel weist die Ringfläche zumindest eine Bogenfläche auf. Bevorzugterweise erstreckt sich die zumindest eine Bogenfläche von der Stirnflanke und der Gegenflanke aus betrachtet radial nach außen. Die Bogenfläche ist also nach radial außen gewölbt, so dass der Spitzenbereich abgerundet ist. Hierdurch wird ein Kontaktbereich beim Erstkontakt zwischen der Dichtfin und dem Einlaufbelag reduziert.

Vorzugsweise erstreckt sich der Spitzenbereich von einem Halsbereich radial nach außen, der sich radial nach außen verjüngt. Hierdurch werden beim Kontakt mit dem Einlaufbelag entstehende Belastungen über den Spitzenbereich in einen Dichtfinbereich abgeleitet, der eine größere Dicke als der Spitzenbereich hat, was die Belastbarkeit des Dichtfins erhöht. Als "Dicke" wird dabei in dieser Schrift dessen maximale Ausdehnung (Erstreckung) in axialer Richtung bezeichnet.

Zur Bildung der axialen Verjüngung des Halsbereichs kann dieser eine Stirnflanke haben, die eine größere Steilheit als die spitzenseitige Stirnflanke hat. Bevorzugterweise liegt ein Flankenwinkel der halsbereichsseitigen Stirnflanke im Bereich von 0° bis 15° zur Radialebene. Der Flankenwinkel der halsbereichsseitigen Stirnflanke ist zum einen so gewählt, dass der Spitzenbereich durch den Halsbereich stabilisiert wird. Zum anderen ist der Flankenwinkel der halsbereichsseitigen Stirnflanke so gewählt, dass im unerwarteten Fall, dass auch der Halsbereich in den Einlaufbelag einläuft, eine vom Spitzenbereich gebildete Einlaufnut im Einlaufbelag durch den Halsbereich zumindest nicht wesentlich verbreitert wird, was dann wieder beim ausschließlichen Eingriff des Spitzenbereichs im Normalbetrieb eine Leckage begünstigen würde.

Der Halsbereich kann insbesondere eine Gegenflanke haben, die die gleiche Steilheit wie die spitzenseitige Gegenflanke hat. Hierdurch lässt sich die Fertigung des Spitzenbereichs und des Halsbereichs im Bereich ihrer Gegenflanken vereinfachen, da in einem Arbeitsschritt beide Gegenflanken ausgebildet werden können.

Um die Einleitung von Rissen in ein Trommelteil des Rotorteils zu vermeiden, haben die Dichtfins einen radial inneren Sockelbereich, von dem sich der Halsbereich radial nach außen erstreckt, und der eine größere Dicke als der Halsbereich hat. Der Sockelbereich wirkt somit als zuverlässiger Rissstopper, so dass sich widererwartend auftretende Risse in der Dichtfin nicht in das Trommelteil erstrecken können, sondern in dem Dichtfin verbleiben.

Bevorzugterweise hat der Spitzenbereich eine Höhe, die größer als eine Höhe des Halsbereichs ist. Dadurch, dass der Spitzenbereich radial höher als der Halsbereich ist, wird deren Beschichten an sich vereinfacht. Der Spitzenbereich kann außerdem eine Höhe haben, die größer als eine Höhe des Sockelbereichs ist. Hierdurch lässt sich der Dichtfins fast über seine gesamte Höhe einfach beschichten.

Gemäß einem besonders vorteilhaften Ausführungsbeispiel eines erfindungsgemäßen Rotorteils ist der Spitzenbereich mit einer schützenden Beschichtung überzogen, wodurch einem Verschleiß der Spitzenbereiche entgegengewirkt wird. Die Beschichtung kann (bei einem erfindungsgemäßen Rotorteil bzw. einem mit einem erfindungsgemäßen Verfahren hergestellten Rotorteil) beispielsweise eine Chromkarbid- und/oder eine MCrAlY-Schicht umfassen. Eine weitere Beschichtung kann eine bearbeitete oder unbearbeitete Aluminiumoxid-TitanoxidSchicht (AL₂O₃-TiO₂) sein. Die Beschichtung kann z.B. mittels thermischen Spritzens, beispielsweise im Sichtlinien-Verfahren, und/oder Plasmaspritzens aufgebracht worden sein bzw. werden und hat im Bereich der Ringfläche eine bevorzugte Stärke von 0,30mm. Im Bereich der Stirnflanke und der Gegenflanke kann die Beschichtung eine geringere Stärke aufweisen. Gemäß einer bevorzugten Ausführungsform kann sich die Beschichtung bis zu einem radial inneren Halsbereich des Dichtfins erstrecken. Zudem kann der Sockelbereich des Dichtfins mit der Beschichtung versehen sein. Hierdurch sind auch der Halsbereich und der Sockelbereich beim Einlaufen in den Einlaufbelag geschützt. Zusätzlich kann sich die Beschichtung auch auf dem Trommelteil zwischen benachbarten Dichtfins erstrecken.

Ein erfindungsgemäßer Verdichter und eine erfindungsgemäße Turbine für eine Gasturbine umfassen jeweils einen Rotor sowie einen Stator mit mindestens einer Leitschaufelreihe. Die Leitschaufeln erstrecken sich radial von außen nach innen. An ihren radial innen liegenden Spitzen ist ein Einlaufbelag angeordnet, der insbesondere Dichtwaben umfassen kann. Der Einlaufbelag kann einteilig sein oder mehrere zusammenhängende oder voneinander getrennte Komponenten umfassen. Insbesondere können an verschiedenen Spitzen verschiedene Komponenten des Einlaufbelags angeordnet sein, die miteinander verbunden sein und so beispielsweise einen Ring ausbilden können. Erfindungsgemäß umfasst der Rotor des Verdichters bzw. der Turbine mindestens ein Rotorteil gemäß einer der in dieser Schrift offenbarten Ausführungsformen, deren mindestens einer Dichtfin wenigstens teilweise in den Einlaufbelag eingreift.

Ein erfindungsgemäßes Verfahren dient einer Herstellung eines Rotorteils, insbesondere eines erfindungsgemäßen Rotorteils gemäß einer der in dieser Schrift offenbarten Ausführungsformen. Das Verfahren umfasst ein Fertigen einer (einstückigen) Blisk mit einer um eine zentrale Achse herum verlaufenden Laufschaufelreihe oder ein Fertigen einer Rotorscheibe mit Aufnahmen zur Anordnung von Laufschaufeln einer Laufschaufelreihe, mit jeweils mindestens einem ringartigen Dichtfin, der zur Laufschaufelreihe und/oder dem Montageabschnitt axial versetzt und koaxial mit ihr verlaufend angeordnet ist. Der Dichtfin weist zudem einen radial äußeren Spitzenbereich auf, der der eine der Laufschaufelreihe und/oder dem Montageabschnitt zugewandte Stirnflanke und eine von der Laufschaufelreihe und/oder dem Montageabschnitt abgewandte Gegenflanke hat, wobei die Stirnflanke eine kleinere Steilheit als die Gegenflanke aufweist. Das Verfahren umfasst weiterhin ein Aufbringen einer Beschichtung auf den Spitzenbereich. Das Aufbringen kann dabei insbesondere ausschließlich oder teilweise radial von außen erfolgen. Dies vereinfacht das Beschichten. Das Fertigen der Blisk kann beispielsweise ein Fräsen, Reibschweißen, präzises elektrochemisches Abtragen und/oder eine generative Fertigung (z.B. selektives Laserschmelzen, Elektronenstrahlschmelzen) umfassen.

Sonstige vorteilhafte Ausführungsbeispiele der Erfindung sind Gegenstand weiterer Unteransprüche.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden gegebenenfalls nicht für jede Figur neu beschrieben.

Es zeigen schematisch:
- Figur 1:: einen Aufbau eines exemplarischen erfindungsgemäßen Rotorteils in perspektivischer Darstellung,
- Figur 2:: einen Teil eines Meridianschnitts eines beispielhaften erfindungsgemäßen Verdichters, und
- Figur 3:: eine Detaildarstellung eines Dichtfins gemäß der vorliegenden Erfindung im Meridianschnitt.

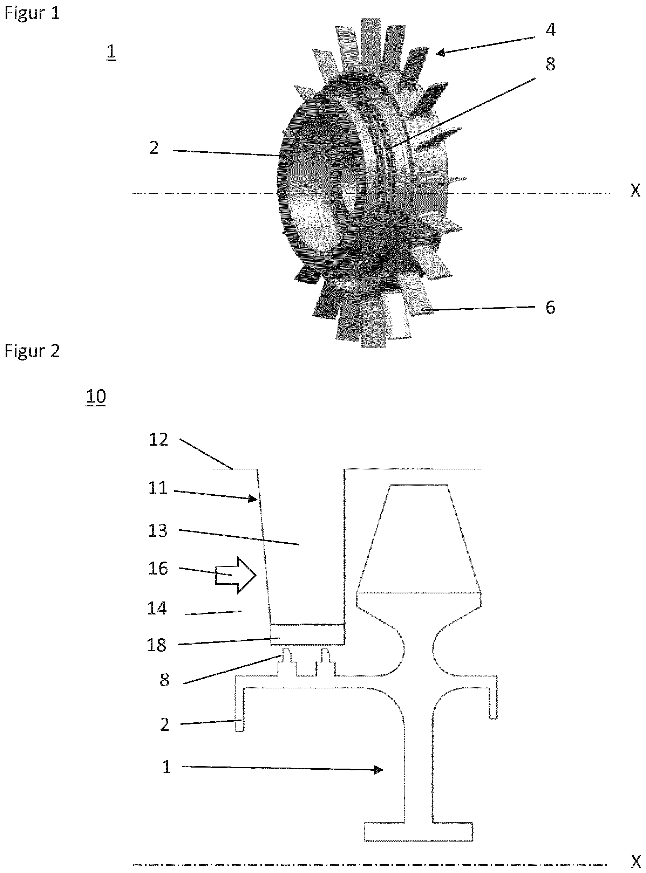

In Figur 1 ist ein erfindungsgemäßes Rotorteil 1 beispielhaft als eine Blisk 1 mit einem Trommelteil 2, einer Laufschaufelreihe 4 mit Laufschaufeln 6 und mehreren ringartigen Dichtfins 8 dargestellt. Die Laufschaufelreihe 4 und die Dichtfins 8 verlaufen koaxial, also um eine gemeinsame zentrale Achse X herum, die im Gebrauch der Blisk 1 die Rotationsachse darstellt. In axialer Richtung sind die Dichtfins 8 von der Laufschaufelreihe 4 beabstandet, also versetzt zu dieser angeordnet. Die Dichtfins 8 sind untereinander axial voneinander beabstandet und hier beispielhaft einseitig der Laufschaufelreihe 4 angeordnet. Gemäß der Darstellung in Figur 1 sind die Dichtfins 8 links bzw. stromauf der Laufschaufelreihe 4 angeordnet. Selbstverständlich können die Dichtfins 8 auch beidseits oder grundsätzlich auch nur rechtsseitig bzw. stromab einer Laufschaufelreihe 4 angeordnet sein. In dem hier gezeigten Ausführungsbeispiel sind auf jeder Seite der Laufschaufelreihe 4 drei Dichtfins 8 vorgesehen, von denen aus Gründen der Übersichtlichkeit lediglich jeweils ein Dichtfin 8 beziffert ist.

Die Figuren 1 bis 3 beziehen sich zwar auf eine Blisk als Rotorteil 1, allerdings kann das Rotorteil 1 auch eine Rotorscheibe mit einem Montageabschnitt sein, der beispielsweise eine Vielzahl von Aufnahmenuten zum Montieren von Laufschaufeln 6 zum Bilden einer Laufschaufelreihe 4 hat.

In Figur 2 ist schematisch ein Ausschnitt eines Meridianschnitts eines erfindungsgemäßen Verdichters 10 dargestellt. Aus Gründen der Übersichtlichkeit sind auch in Figur 2 nicht alle sich wiederholenden Elemente mit einem Bezugszeichen versehen. Der Ausschnitt zeigt einen Teil einer Blisk 1 entlang der zentralen Achse X sowie einen Teil eines Stators 11 des Verdichters 10. Der Stator 11 weist ein Gehäuse 12 und an dem Gehäuse 12 befestigte Leitschaufelreihen mit Leitschaufeln 13 auf. Zwischen einem Trommelteil 2 der Blisk 1, die mit anderen nicht gezeigten Bauteilen zusammen einen Rotor bildet, und dem Gehäuse 12 ist ein ringartiger Strömungskanal 14 ausgebildet, durch den beim bestimmungsgemäßen Gebrauch ein Hauptstrom in der mit einem Pfeil 16 angegebenen Richtung strömt.

Die Leitschaufeln 13 sind radial außen in dem Gehäuse 12 aufgenommen. An ihren radial innen angeordneten Spitzen sind Einlaufbeläge 18 angeordnet, in die Dichtfins 8 eingreifen, so dass eine Leckage zwischen den Einlaufbelägen 18 und den Dichtfins 8 minimiert bzw. eliminiert wird.

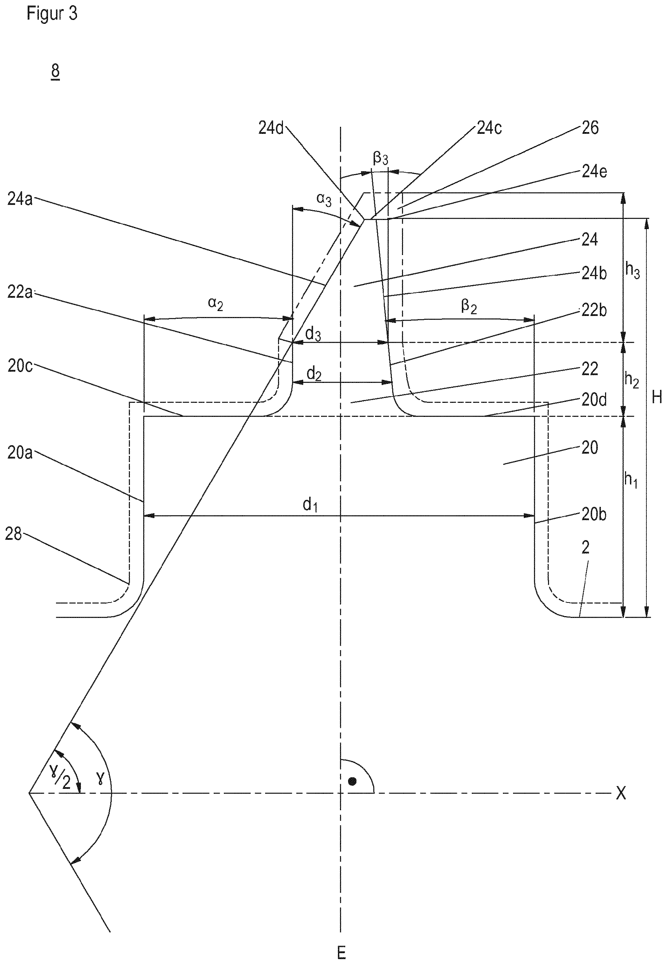

Figur 3 bietet eine Detailansicht eines Dichtfins 8 gemäß einer Ausführungsform der vorliegenden Erfindung, bei dem der zumindest eine Dichtfin 8 stromab einer Laufschaufelreihe positioniert ist. Auch diese Figur zeigt einen Ausschnitt eines Meridianschnitts entlang der zentralen Achse X.

Der dargestellte Dichtfin 8 hat einen radial inneren Sockelbereich 20, einen radial äußeren Spitzenbereich 24 und ein sich zwischen dem Sockelbereich 20 und dem Spitzenbereich 24 erstreckenden Halsbereich 22.

Der Sockelbereich 20 bildet den radial inneren Ringbereich der Dichtfins 8. Er erstreckt sich über nicht bezifferte Hohlkehlen vom Trommelteil 2 radial nach außen und hat eine einer Laufschaufelreihe zugewandte Stirnflanke 20a und eine von der Laufschaufelreihe abgewandte Gegenflanke 20b. Die Stirnflanke 20a und die Gegenflanke 20b erstrecken sich senkrecht zur zentralen Achse X und verlaufen somit entlang einer Radialebene E. Die Radialebene E ist eine Ebene, die von der zentralen Achse X durchstoßen wird. Insbesondere durch eine im Folgenden noch erläuterte unterschiedliche Steilheit im Spitzenbereich 24 ist der Dichtfin 8 asymmetrisch zur Radialebene E ausgeführt. Es existiert also keine radiale Symmetrieebene durch den Dichtfin 8. Allerdings ist der Dichtfin 8 rotationssymmetrisch zur zentralen Achse X. Durch die orthogonale Ausbildung der Flanken 20a, 20b zur zentralen Achse X verlaufen sie in radialer Richtung parallel zueinander. Der Sockelbereich 20 hat hierdurch über seine radiale Erstreckung bzw. radiale Höhe h₁ eine konstante Dicke d₁. Als Dicke wird dabei in dieser Schrift dessen maximale Ausdehnung bzw. Erstreckung in axialer Richtung bezeichnet. Selbstverständlich kann der Sockelbereich 20 aber auch mit variierender Dicke ausgebildet sein, beispielweise mit einem trapezförmigen Querschnitt, dessen Dicke radial innen größer ist als radial außen.

Der Halsbereich 22 bildet den radial mittleren Ringbereich des Dichtfins 8. Er erstreckt sich in etwa axial mittig von dem Sockelbereich 20 radial nach außen. Er hat eine Dicke d₂, die kleiner als die Dicke d₁ des Sockelbereichs 20 ist. In Richtung des Hauptstroms betrachtet wird hierdurch eine vordere Sockelfläche 20c und eine hintere Sockelfläche 20d gebildet, die bevorzugterweise die gleiche axiale Erstreckung haben. Die Sockelflächen 20c, 20d verlaufen hier in axialer Richtung, allerdings können sie auch in Richtung des Halsbereichs 22 radial nach außen angestellt und somit als Schrägflächen ausgebildet sein. Durch die Anstellung der Sockelflächen 20c, 20d lässt sich die Belastungseinleitung von dem Halsbereich 22 in den Sockelbereich 20 beeinflussen. Bevorzugterweise hat der Halsbereich 22 eine radiale Höhe h₂, die kleiner ist als die radiale Höhe h₁ des Sockelbereichs 20.

Der Halsbereich 22 hat eine der Laufschaufelreihe zugewandte Stirnflanke 22a und eine von der Laufschaufelreihe abgewandte Gegenflanke 22b. Radial nach außen verjüngt sich der Halsbereich 22. Die Verjüngung wird dadurch erreicht, dass entweder die Stirnflanke 22a, die Gegenflanke 22b oder sowohl die Stirnflanke 22a, als auch die Gegenflanke 22b zur Radialebene E angestellt ist bzw. sind. In dem hier gezeigten Ausführungsbeispiel hat die Stirnflanke 22a einen Flankenwinkel α₂ = 0° zur Radialebene E. Die Gegenflanke 22b hat einen Flankenwinkel β₂ = 5° zur Radialebene E. Die Stirnflanke 22a verläuft in diesem Ausführungsbeispiel im Wesentlichen entlang der Radialebene E, kann jedoch alternativ auch um einen Flankenwinkel angestellt sein, der bevorzugt 0°< α₂ ≤ 15° beträgt.

Der Spitzenbereich 24 bildet den radial äußeren Ringbereich des Dichtfin 8. Er erstreckt sich vom Halsbereich 22 radial nach außen. Er hat eine der Laufschaufelreihe zugewandte Stirnflanke 24a, eine von der Laufschaufelreihe abgewandte Gegenflanke 24b und eine sich radial außen erstreckende axiale Ringfläche 24c.

Der Spitzenbereich 24 verjüngt sich radial nach außen. Im Übergangsbereich vom Halsbereich 22 in den Spitzenbereich 24 haben beide Bereiche 22, 24 die gleiche Dicke d₃, so dass keine den Sockelflächen 20c, 20d vergleichende Halsbereichsflächen geschaffen werden. Vom Halsbereich 22 bis zur Ringfläche 24c gemessen hat der Spitzenbereich 24 eine radiale Höhe h₃, die größer als die radiale Höhe h₂ des Halsbereichs 22 und kleiner als die Höhe h₁ des Sockelbereichs 20 ist. Beim Versehen des Spitzenbereichs 24 mit einer im Folgenden noch erläuterten Beschichtung 26 beträgt seine Höhe h₃ ungefähr 1,50 mm bis 1,82 mm, bevorzugterweise ist h₃ = 1,66 mm. Die vorgenannten Absolutwerte sind nur exemplarisch angeben. Wesentlich ist, dass die Höhe h₃ größer als die Höhe h2 (h₃ > h₂) ist. Die Höhe h₃ kann ebenfalls größer als die Höhe h1 (h₃ > h₁) sein.

Die Stirnflanke 24a und die Gegenflanke 24b des Spitzenbereichs 24 sind zur Radialebene E angestellt, wobei bezogen auf die Radialebene E die Stirnflanke 24a einen größeren Flankenwinkel α₃ und somit eine kleinere Steilheit als die Gegenflanke 24b hat. Der Flankenwinkel α₃ der Stirnflanke 24a liegt in einem Winkelbereich von etwa 25° und 45°, bevorzugterweise ist der Flankenwinkel α₃ = 30°. Mit anderen Worten, die Stirnflanke 24a des Spitzenbereichs 22a verläuft im Wesentlichen entlang einer Mantelfläche eines abstrakten, also gedachten, vorzugsweise geraden Kreiskegels um die zentrale Achse X. Der zugehörige Kegel hat einen Öffnungswinkel γ im Bereich von etwa 90° bis 130°, bevorzugterweise beträgt der Öffnungswinkel γ = 120°.

Die Gegenflanke 24b hat bei diesem Ausführungsbeispiel einen Flankenwinkel β₃ in einem Winkelbereich von 1° bis 10° zur Radialebene E, bevorzugterweise beträgt der Flankenwinkel β₃ = 5°. Der Flankenwinkel β₃ der Gegenflanke 24b des Spitzenbereichs 24 und der Flankenwinkel β₂ der Gegenflanke 22b des Halsbereichs 22 sind bevorzugterweise gleich gewählt, so dass die beiden Gegenflanken 24a, 24b knickfrei ineinander übergehen.

Die Ringfläche 24c erstreckt sich zwischen der Stirnflanke 24a und der Gegenflanke 24b in axialer Richtung. Sie verbindet die Stirnflanke 24a und die Gegenflanke 24b radial außen miteinander. Kanten 24d, 24e zwischen der Stirnflanke 24a und der Ringfläche 24c sowie zwischen der Gegenflanke 24b und der Ringfläche 24c sind abgerundet.

Zum Schutz vor Beschädigungen des Spitzenbereichs 24 ist dieser, wie durch die unterbrochene Linie angedeutet, vollständig mit der vorerwähnten Beschichtung 26 versehen. Seine Stirnflanke 24a, Gegenflanke 24b und Ringfläche 24c sind somit unter der Beschichtung 26 angeordnet und treten über diese mit dem Einlaufbelag 18 in Reibkontakt. Die Beschichtung 26 folgt dem jeweiligen Verlauf der Stirnflanke 24a, Gegenflanke 24 b und Ringfläche 24c. Sie ist beispielsweise eine Chromkarbid- und/oder eine MCrAlY-Schicht. Sie kann z.B. mittels thermischen Spritzens und/oder Plasmaspritzens aufgebracht worden sein bzw. werden und hat im Bereich der Ringfläche 24c eine bevorzugte Stärke von 0,30mm. Im Bereich der Stirnflanke 24a und der Gegenflanke 24b kann die Beschichtung 26 eine geringere Stärke aufweisen. Wie durch die gestrichelte Linie 28 angedeutet, kann sich die Beschichtung 26 zusätzlich auf den Halsbereich 22, den Sockelbereich 20 und auf einen Bereich des Trommelteils 2 zwischen benachbarten Dichtfins 8 erstrecken, so dass der Dichtfin 8 über seine Gesamthöhe H und auch die Trommelteile 2 zwischen den Dichtfins 8 vollständig radial außen beschichtet sind.

Eine erfindungsgemäße Blisk 1 für eine Gasturbine umfasst eine um eine zentrale Achse X herum verlaufende Laufschaufelreihe 4 und - zu dieser axial versetzt und koaxial verlaufend - mindestens einen ringartigen Dichtfin 8. Der Dichtfin 8 hat einen radial äußeren Spitzenbereich 24 mit einer der Laufschaufelreihe 4 zugewandten Stirnflanke 24a und eine von der Laufschaufelreihe 4 abgewandten Gegenflanke 24b, wobei die Stirnflanke 24a eine kleinere Steilheit als die Gegenflanke 24b hat. Dies ist jedoch nicht zwingend erforderlich

Eine erfindungsgemäße Turbine umfasst einen Rotor und einen Stator 11. Der Stator 11 umfasst mindestens eine Leitschaufelreihe 13 mit mindestens einem Einlaufbelag 18. Der Rotor umfasst mindestens eine Blisk 1 gemäß einer Ausführungsform der in dieser Schrift offenbarten Erfindung, deren mindestens einer Dichtfin 8 wenigstens teilweise in den Einlaufbelag 18 eingreift.

Ein erfindungsgemäßer Verdichter 1 umfasst analog einen Rotor und einen Stator 11. Dieses umfasst mindestens eine Leitschaufelreihe 13 mit mindestens einem Einlaufbelag 18. Der Rotor umfasst mindestens eine Blisk 1 gemäß einer Ausführungsform der in dieser Schrift offenbarten Erfindung, deren mindestens einer Dichtfin 8 wenigstens teilweise in den Einlaufbelag 18 eingreift.

Ein erfindungsgemäßes Verfahren zum Herstellen einer Blisk 1 für eine Gasturbine umfasst ein Fertigen einer Blisk 1 mit mindestens einem ringartigen Dichtfin 8 sowie ein Aufbringen einer Beschichtung 26 zumindest auf einen Spitzenbereich 24 des Dichtfins 8, der eine einer Laufschaufelreihe 4 zugewandte Stirnflanke 24a und eine von der Laufschaufelreihe 4 abgewandte Gegenflanke 24b hat, wobei die Stirnflanke 24a eine kleinere Steilheit als die Gegenflanke 24b aufweist.

Offenbart ist ein Rotorteil für eine Gasturbine, eingerichtet zur Rotation um eine zentrale Achse, wobei das Rotorteil eine Blisk mit einer um die zentrale Achse herum verlaufenden Laufschaufelreihe oder eine Rotorscheibe mit einem Montageabschnitt zum Montieren von Laufschaufeln einer um die zentrale Achse herum verlaufenden Laufschaufelreihe ist, und zur Laufschaufelreihe und/oder dem Montageabschnitt axial versetzt und koaxial verlaufend mindestens einen ringartigen und axial asymmetrischen Dichtfin hat, der einen radial äußeren Spitzenbereich mit einer der Laufschaufelreihe und/oder dem Montageabschnitt zugewandten Stirnflanke und eine von der Laufschaufelreihe und/oder dem Montageabschnitt abgewandten Gegenflanke aufweist, wobei die Stirnflanke eine kleinere Steilheit als die Gegenflanke hat, eine Turbine und ein Verdichter mit einem derartigen Rotorteil und ein Verfahren zum Herstellen eines derartigen Rotorteils mit zumindest einer Dichtfinbeschichtung.

### Bezugszeichen

- 1: Rotorteil
- 2: Trommelteil
- 4: Laufschaufelreihe
- 6: Laufschaufel
- 8: Dichtfin
- 10: Verdichter
- 11: Stator
- 12: Gehäuse
- 13: Leitschaufel
- 14: Strömungskanal
- 16: Richtung eines Hauptstroms
- 18: Einlaufbelag
- 20: Sockelbereich
- 20a: Stirnflanke
- 20b: Gegenflanke
- 20c: vordere Sockelfläche
- 20d: hintere Sockelfläche
- 22: Halsbereich
- 22a: Stirnflanke
- 22b: Gegenflanke
- 24: Spitzenbereich
- 24a: Stirnflanke
- 24b: Gegenflanke
- 24c: Ringfläche
- 24d: Kante
- 24e: Kante
- 26: Beschichtung
- 28: zusätzliche Erstreckung der Beschichtung

- d₁: Dicke des Sockelbereichs
- d₂: Dicke des Halsbereichs
- d₃: Dicke des Spitzenbereichs
- h₁: Höhe des Sockelbereichs
- h₂: Höhe des Halsbereichs
- h₃: Höhe des Spitzenbereichs
- α₂: Flankenwinkel der Stirnflanke des Halsbereichs
- α₃: Flankenwinkel der Stirnflanke des Spitzenbereichs
- β₂: Flankenwinkel der Gegenflanke des Halsbereichs
- β₃: Flankenwinkel der Gegenflanke des Spitzenbereichs

- E: Radialebene
- H: gesamte Höhe eines Dichtfins ohne Beschichtung
- X: zentrale Achse
- γ: Öffnungswinkel

## Patentansprüche

1. Rotorteil (1) für eine Gasturbine, eingerichtet zur Rotation um eine zentrale Achse (X), wobei das Rotorteil (1) eine Blisk mit einer um die zentrale Achse (X) herum verlaufenden Laufschaufelreihe (4) oder
eine Rotorscheibe mit einem Montageabschnitt zum Montieren von Laufschaufeln einer um die zentrale Achse (X) herum verlaufenden Laufschaufelreihe (4) ist, und dazu axial versetzt und koaxial verlaufend mindestens einen ringartigen Dichtfin (8) hat, wobei der Dichtfin (8) einen radial inneren Sockelbereich (20), einen radial äußeren Spitzenbereich (24) und einen sich zwischen dem Sockelbereich (20) und dem Spitzenbereich (24) erstreckenden Halsbereich (22) hat, wobei der radial äußere Spitzenbereich eine der Laufschaufelreihe (4) und/oder dem Montageabschnitt zugewandten Stirnflanke (24a) und eine von der Laufschaufelreihe (4) und/oder dem Montageabschnitt abgewandten Gegenflanke (24b) aufweist,
**dadurch gekennzeichnet,**
**dass** die Stirnflanke (24a) eine kleinere Steilheit als die Gegenflanke (24b) hat.

2. Rotorteil nach Anspruch 1, wobei die Stirnflanke (24a) einen Flankenwinkel (α₃) in einem Winkelbereich von 25° bis 45° zu einer Radialebene (E) hat.

3. Rotorteil nach Anspruch 2, wobei die Gegenflanke (24b) zu der Radialebene (E) ebenfalls angestellt ist.

4. Rotorteil nach einem der vorangehenden Ansprüche, wobei die spitzenseitige Stirnflanke (24a) und die spitzenseitige Gegenflanke (24b) über eine Ringfläche (24c) ineinander übergehen.

5. Rotorteil nach Anspruch 4, wobei die Ringfläche (24c) zumindest eine Planfläche aufweist.

6. Rotorteil nach Anspruch 4, wobei die Ringfläche (24c) zumindest eine Bogenfläche aufweist.

7. Rotorteil nach einem der vorhergehenden Ansprüche, wobei der Spitzenbereich (24) sich radial nach außen von dem Halsbereich (22) erstreckt, der sich radial nach außen verjüngt.

8. Rotorteil nach Anspruch 7, wobei der Halsbereich (22) eine Stirnflanke (22a) hat, die eine größere Steilheit als die spitzenseitige Stirnflanke (24a) hat.

9. Rotorteil nach Anspruch 7 oder 8, wobei der Halsbereich (22) eine Gegenflanke (22b) hat, die die gleiche Steilheit wie die spitzenseitige Gegenflanke (24b) hat.

10. Rotorteil nach Anspruch 8 oder 9, wobei der Halsbereich (22) sich radial nach außen von dem Sockelbereich (20) erstreckt, der eine größere axiale Dicke (d1) als der Halsbereich (22) hat.

11. Rotorteil nach Anspruch 7 oder 10, wobei der Spitzenbereich (24) eine Höhe (h3) hat, die größer ist als eine Höhe (h2) des Halsbereichs (22).

12. Rotorteil nach einem der vorhergehenden Ansprüche, wobei zumindest der Spitzenbereich (24) mit einer Beschichtung (26) überzogen ist.

13. Verdichter (10) für eine Gasturbine, der einen Rotor und einem Stator (11) umfasst, wobei der Stator (11) mindestens eine Leitschaufelreihe mit radial nach innen verlaufenden Leitschaufeln (13) umfasst, an deren Spitzen ein Einlaufbelag (18) angeordnet ist, wobei der Rotor mindestens ein Rotorteil (1) gemäß einem der vorhergehenden Ansprüche umfasst, deren mindestens einer Dichtfin (8) wenigstens teilweise in den Einlaufbelag (18) eingreift.

14. Turbine für eine Gasturbine, die einen Rotor und einen Stator (11) mit mindestens einer Leitschaufelreihe mit Leitschaufeln (13) umfasst, an deren Spitzen jeweils ein Einlaufbelag (18) angeordnet ist, wobei der Rotor mindestens ein Rotorteil (1) gemäß einem der Ansprüche 1 bis 12 umfasst, deren mindestens einer Dichtfin (8) wenigstens teilweise in den Einlaufbelag (18) eingreift.

15. Verfahren zum Herstellen eines Rotorteils (1) für eine Gasturbine, wobei das Verfahren ein Fertigen einer Blisk mit einer um eine zentrale Achse (X) herum verlaufenden Laufschaufelreihe (4) oder ein Fertigen einer Rotorscheibe mit einem Montageabschnitt zum Montieren von Laufschaufeln einer um eine zentrale Achse (X) herum verlaufenden Laufschaufelreihe (4) umfasst, wobei das Rotorteil (1) mindestens einen ringartigen Dichtfin (8) mit einem radial inneren Sockelbereich (20), einem radial äußeren Spitzenbereich (24) und einem sich zwischen dem Sockelbereich (20) und dem Spitzenbereich (24) erstreckenden Halsbereich (22), der zur Laufschaufelreihe (4) und/oder dem Montageabschnitt axial versetzt und koaxial mit ihr/ihm verlaufend angeordnet ist, wobei der radial äußere Spitzenbereich eine der Laufschaufelreihe (4) und/oder dem Montageabschnitt zugewandte Stirnflanke (24a) und eine von der Laufschaufelreihe (4) und/oder dem Montageabschnitt abgewandte Gegenflanke (24b) aufweist, wobei die Stirnflanke (24a) eine kleinere Steilheit als die Gegenflanke (24b) aufweist, und wobei das Verfahren weiterhin ein Aufbringen einer Beschichtung (26) auf den Spitzenbereich (24) umfasst.

## Claims

1. Rotor part (1) for a gas turbine, designed for rotation about a central axis (X), the rotor part (1) being a blisk which has a rotor blade row (4) extending around the central axis (X), or which has a rotor disk having a mounting portion for mounting rotor blades of a rotor blade row (4) extending around the central axis (X), and which has at least one annular sealing fin (8) extending so as to be axially offset therefrom and coaxial therewith, the sealing fin (8) having a radially inner base region (20), a radially outer tip region (24) and a neck region (22) that extends between the base region (20) and the tip region (24), the radially outer tip region comprising a front flank (24a), which faces the rotor blade row (4) and/or the mounting portion, and an opposite flank (24b), which faces away from the rotor blade row (4) and/or the mounting portion, **characterized in that** the front flank (24a) is less steep than the opposite flank (24b).

2. Rotor part according to claim 1, wherein the front flank (24a) has a flank angle (α₃) in an angular range of 25° to 45° to a radial plane (E).

3. Rotor part according to claim 2, wherein the opposite flank (24b) is also inclined with respect to the radial plane (E).

4. Rotor part according to any of the preceding claims, wherein the tip-side front flank (24a) and the tip-side opposite flank (24b) transition into one another via an annular surface (24c).

5. Rotor part according to claim 4, wherein the annular surface (24c) has at least one planar surface.

6. Rotor part according to claim 4, wherein the annular surface (24c) has at least one arcuate surface.

7. Rotor part according to any of the preceding claims, wherein the tip region (24) extends radially outwards from the neck region (22), which tapers radially outwards.

8. Rotor part according to claim 7, wherein the neck region (22) has a front flank (22a) which is more steep than the tip-side front flank (24a).

9. Rotor part according to either claim 7 or claim 8, wherein the neck region (22) has an opposite flank (22b), which is equally as steep as the tip-side opposite flank (24b).

10. Rotor part according to either claim 8 or claim 9, wherein the neck region (22) extends radially outwards from the base region (20), which has a greater axial thickness (d1) than the neck region (22).

11. Rotor part according to either claim 7 or claim 10, wherein the tip region (24) has a height (h3) that is greater than a height (h2) of the neck region (22).

12. Rotor part according to any of the preceding claims, wherein at least the tip region (24) is covered with a coating (26).

13. Compressor (10) for a gas turbine, which comprises a rotor and a stator (11), wherein the stator (11) comprises at least one guide vane row having guide vanes (13) which extend radially inwards and at the tips of which an abradable coating (18) is arranged, wherein the rotor comprises at least one rotor part (1) according to any of the preceding claims, the at least one sealing fin (8) of which at least partially engages in the abradable coating (18).

14. Turbine for a gas turbine, which turbine comprises a rotor and a stator (11) having at least one guide vane row having guide vanes (13), at the tips of which an abradable coating (18) is arranged in each case, wherein the rotor comprises at least one rotor part (1) according to any of claims 1 to 12, the at least one sealing fin (8) of which at least partially engages in the abradable coating (18).

15. Method for producing a rotor part (1) for a gas turbine, wherein the method comprises manufacturing a blisk which has a rotor blade row (4) extending around a central axis (X), or manufacturing a rotor disk having a mounting portion for mounting rotor blades of a rotor blade row (4) extending around a central axis (X), the rotor part (1) comprising at least one annular sealing fin (8) having a radially inner base region (20), a radially outer tip region (24) and a neck region (22) that extends between the base region (20) and the tip region (24) and is arranged so as to be axially offset from the rotor blade row (4) and/or the mounting portion and so as to extend coaxially therewith, wherein the radially outer tip region comprises a front flank (24a), which faces the rotor blade row (4) and/or the mounting portion, and an opposite flank (24b), which faces away from the rotor blade row (4) and/or the mounting portion, wherein the front flank (24a) is less steep than the opposite flank (24b), and wherein the method also comprises applying a coating (26) to the tip region (24).

## Revendications

1. Pièce de rotor (1) destinée à une turbine à gaz, agencée pour tourner autour d'un axe central (X), dans laquelle la pièce de rotor (1) est un disque aubagé monobloc doté d'une rangée d'aubes mobiles (4) s'étendant autour de l'axe central (X) ou un disque de rotor doté d'une section de montage destinée au montage d'aubes mobiles d'une rangée d'aubes mobiles (4) s'étendant autour de l'axe central (X) et d'une ou de plusieurs lame(s) d'étanchéité annulaire(s) (8) décalées axialement et s'étendant coaxialement par rapport à celui-ci, dans laquelle lame d'étanchéité (8) présente une zone de socle (20) radialement intérieure, une zone de pointe (24) radialement extérieure et un zone de col (22) s'étendant entre la zone de socle (20) et la zone de pointe (24), dans laquelle la zone de pointe radialement extérieure présente un flanc avant (24a) tourné vers la rangée d'aubes mobiles (4) et/ou la partie de montage et un contre-flanc (24b) opposé à la rangée d'aubes mobiles (4) et/ou la partie de montage, **caractérisé en ce que** la pente du flanc avant (24a) est inférieure à celle du contre-flanc (24b).

2. Pièce de rotor selon la revendication 1, dans laquelle le flanc avant (24a) présente un angle de flanc (α₃) dans une plage angulaire de 25° à 45° par rapport à un plan radial (E).

3. Pièce de rotor selon la revendication 2, dans laquelle le contre-flanc (24b) par rapport au plan radial (E) est également prévu.

4. Pièce de rotor selon l'une des revendications précédentes, dans laquelle le flanc avant (24a) du côté de la pointe et le contre-flanc (24b) du côté de la pointe sont sous-tendus rejoignent par une surface annulaire (24c).

5. Pièce de rotor selon la revendication 4, dans laquelle la surface annulaire (24c) présente au moins une surface plane.

6. Pièce de rotor selon la revendication 4, dans laquelle la surface annulaire (24c) présente au moins une surface en arc.

7. Pièce de rotor selon l'une des revendications précédentes, dans laquelle la zone de pointe (24) s'étend radialement vers l'extérieur à partir de la zone de col (22) qui s'effile radialement vers l'extérieur.

8. Pièce de rotor selon la revendication 7, dans laquelle la zone de col (22) présente un flanc avant (22a) dont pente est supérieure à celle du flanc avant (24a) du côté de la pointe.

9. Pièce de rotor selon la revendication 7 ou 8, dans laquelle la zone de col (22) présente un contre-flanc (22b) dont la pente est identique à celle du contre-flanc (24b) du côté de la pointe.

10. Pièce de rotor selon la revendication 8 ou 9, dans laquelle la zone de col (22) s'étend radialement vers l'extérieur à partir de la zone de socle (20) et présente une épaisseur axiale (d1) supérieure à celle de la zone de col (22).

11. Pièce de rotor selon la revendication 7 ou 10, dans laquelle la zone de pointe (24) a une hauteur (h3) supérieure à une hauteur (h2) de la zone de col (22).

12. Pièce de rotor selon l'une quelconque des revendications précédentes, dans laquelle au moins la zone de pointe (24) est recouverte d'un revêtement (26).

13. Compresseur (10) destiné à une turbine à gaz, qui comprend un rotor et un stator (11), dans lequel le stator (11) comprend au moins une rangée d'aubes de guidage comportant des aubes de guidage (13) qui s'étendent radialement vers l'intérieur et aux extrémités desquelles est disposé un revêtement de rodage (18), dans lequel le rotor comprend au moins une pièce de rotor (1) selon une des revendications précédentes, dont au moins une lame d'étanchéité (8) s'engrène au moins partiellement dans le revêtement de rodage (18).

14. Turbine destinée à une turbine à gaz, laquelle turbine comprend un rotor et un stator (11) doté d'une ou de plusieurs rangée(s) d'aubes de guidage comportant des aubes de guidage (13), aux extrémités desquelles est disposé respectivement un revêtement de rodage (18), dans laquelle le rotor comprend au moins une pièce de rotor (1) selon l'une des revendications 1 à 12, dont au moins une lame d'étanchéité (8) s'engrène au moins partiellement dans le revêtement de rodage (18).

15. Procédé de fabrication d'une pièce de rotor (1) destinée à une turbine à gaz, dans lequel le procédé comprend la fabrication d'un disque aubagé monobloc doté d'une rangée d'aubes mobiles (4) s'étendant autour d'un axe central (X) ou la fabrication d'un disque de rotor comportant une pièce de montage destinée au montage des aubes d'une rangée d'aubes mobiles (4) s'étendant autour d'un axe central (X), dans lequel la pièce de rotor (1) comprend au moins une lame annulaire d'étanchéité (8) comportant une zone de socle (20) radialement intérieure, une zone de pointe radialement extérieure (24) et une zone de col (22) s'étendant entre la zone de socle (20) et la zone de pointe (24), la zone de col étant décalée axialement par rapport à la rangée d'aubes de guidage mobiles (4) et/ou à la partie de montage et s'étendant coaxialement par rapport à celle-ci, dans lequel la zone de pointe radialement extérieure présente un flanc avant (24a) tourné vers la rangée d'aubes mobiles (4) et ou la partie de montage et un contre-flanc (24b) opposé à la rangée d'aubes mobiles (4) et/ou à la partie de montage, dans lequel le flanc avant (24a) présente une pente inférieure à celle du contre-flanc (24b), et dans lequel le procédé comprend en outre une application d'un revêtement (26) sur la zone de pointe (24).
